## Europäisches Patentamt

## European Patent Office

## Office européen des brevets

(11) Numéro de publication: **0 226 497**
**B1**

(12) **FASCICULE DE BREVET EUROPEEN**

(45) Date de publication du fascicule du brevet:
**14.02.90**

(21) Numéro de dépôt: **86402553.1**

(22) Date de dépôt: **18.11.86**

(51) Int. Cl.⁴: **B60L 5/08**

(54) **Tête de trolleybus.**

(30) Priorité: **20.11.85 FR 8517165**
**20.06.86 FR 8608936**

(43) Date de publication de la demande:
**24.06.87 Bulletin 87/26**

(45) Mention de la délivrance du brevet:
**14.02.90 Bulletin 90/7**

(84) Etats contractants désignés:
**AT BE CH DE ES FR GB GR IT LI LU NL SE**

(56) Documents cités:
**CH-A- 359 463**
**DE-C- 974 463**
**FR-A- 2 320 204**
**US-A- 2 508 531**

(73) Titulaire: **Delachaux S.A., 119, Avenue Louis Roche, F-92231 Gennevilliers(FR)**

(72) Inventeur: **Pelletier, Yves, 24, Mail Alphonse Lamartine Jouy Les Moutiers, F-95000 Cergy(FR)**
Inventeur: **Dumontet, Max, 8, rue du Pont de Pierre, F-93500 Pantin(FR)**

(74) Mandataire: **Martin, Jean-Jacques et al, Cabinet REGIMBEAU 26, Avenue Kléber, F-75116 Paris(FR)**

ACTORUM AG

## Description

La présente invention concerne le domaine des trolleybus on véhicules analogues, et plus particulièrement une tête de trolleybus du type comportant un corps de berceau monté pivotant en bout de perche, un berceau monté sur le corps de berceau avec une liaison permettant une oscillation autour d'un axe sensiblement vertical et un basculement autour d'un axe sensiblement horizontal, ledit berceau recevant un frotteur d'usure pour la transmission du courant vers un câble porté par la perche, par l'intermédiaire d'un shunt raccordé au berceau.

Dans certaines têtes de trolleybus connues, le berceau présente en sa partie supérieure une pièce présentant une rainure à pans inclinés, souvent dénommée porte-frotteur. Un frotteur d'usure est logé par coincement conique dans la rainure de cette pièce, et une lamelle de sécurité est prévue pour éviter toute extraction malencontreuse en marche arrière, le coincement conique étant naturellement prévu de telle façon que le serrage tende à se renforcer lorsque le trolleybus est en marche avant.

Le frotteur est une pièce d'usure qui doit être changée très régulièrement, et souvent tous les jours. De ce fait, le montage à encastrement, s'il est mécaniquement sûr, implique une opération de démontage fastidieuse : l'opérateur doit d'abord dévisser la lame de sécurité, puis prendre un outil imprimant un choc pour extraire le frotteur d'usure, et procéder encore à la manoeuvre inverse pour la mise en place d'un nouveau frotteur.

De plus, le frotteur d'usure est d'un coût de fabrication relativement élevé du fait de sa forme à pans inclinés : il doit être en effect usiné à partir d'une pièce découpée dans une plaque, l'usinage devant être soigné quant aux tolérances pour le contact électrique avec les faces concernées de la rainure du porte-frotteur. Le brevet français N° 2 320 204 donne une illustration d'un frotteur de ce type, utilisé pour une tête comportant un frotteur monté à chaque extrémité d'un balancier.

Cependant, le contact électrique reste imparfait en raison du frottement entre surfaces lisses du frotteur d'usure et du porte-frotteur, le caractère lisse étant rendu obligatoire du fait de l'encastrement par glissement: dans la réalité, le contact est en fait limité à des points ou zones localisées, ce qui non seulement influe sur la qualité du contact pour la transmission du courant, mais risque de provoquer des échauffements indésirables du fait de la concentration du courant dans ces quelques zones.

D'autres têtes de trolleybus connues utilisent un frotteur d'usure qui n'est pas encastré, en prévoyant un berceau en deux parties fixées entre elles par boulonnage.

Le brevet suisse N° 359 463 décrit une tête de trolleybus dont le berceau comporte une partie supérieure boulonnée de chaque côté d'un plan longitudinal médian, et maintenant ainsi un frotteur d'usure contre une face lisse de support et de contact.

La tenue par boulons n'est pas satisfaisante dans la pratique. D'abord, le couple exercé sur les boulons doit être choisi avec précision (un couple trop faible introduit un jeu dont la conséquence est un mauvais contact électrique, et un couple trop fort risque de fissurer le frotteur d'usure). Ensuite, les tolérances d'usinage sont nécessairement contraignantes (usinage soigné du frotteur et des parties du berceau concernées). Enfin, le démontage de la tête, pour le remplacement du frotteur d'usure, ne peut se faire rapidement : il faut dégager les boulons, puis procéder à un nouveau serrage précis.

Le brevet allemand N° 974 463 décrit une technique analogue à la précédente, avec un boulonnage dans un plan longitudinal médian. La qualité du contact électrique est améliorée par rapport à la tête décrite dans le brevet suisse précité, grâce à deux lames de contact plates prises en sandwich entre une face de support du berceau et le frotteur d'usure, mais les inconvénients déjà mentionnés pour le maintien rigide du frotteur d'usure par boulonnage subsistent.

D'une façon générale, dans les têtes de trolleybus décrites dans les deux derniers brevets précités, il est à noter que le contact entre le frotteur d'usure et la face de support associée n'est en réalité obtenu qu'en quelques points seulement. Cela nécessite d'avoir un frotteur dont la face inférieure est de dimensions importantes : avec la rigidité propre que doit présenter ce frotteur pour résister aux efforts de compression exercés au serrage, on aboutit nécessairement à un frotteur volumineux, et donc plus coûteux unitairement.

L'état de la technique peut enfin être illustré par le brevet américain N° 2 508 531, décrivant également un maintien par boulonnage. Le berceau de la tête de trolleybus décrite présente des ailettes latérales de refroidissement, ce qui montre bien l'importance des problèmes d'échauffement qu'il faut surmonter.

L'invention a pour objet de proposer une tête de trolleybus plus performante que les têtes précitées.

L'invention a en particulier pour but de permettre un démontage rapide et aisé, sans outils particuliers, pour le remplacement du frotteur d'usure.

L'invention a aussi pour but de pouvoir utiliser un frotteur d'usure dont la forme permette une fabrication économique en série, en particulier au moyen de techniques de filage, tout en procurant un bon contact électrique.

Il s'agit plus particulièrement d'une tête de trolleybus, comportant un corps de berceau monté pivotant en bout de perche, un berceau monté sur le corps de berceau avec une liaison permettant une oscillation autour d'un axe sensiblement vertical et un basculement autour d'un axe sensiblement horizontal, ledit berceau recevant un frotteur d'usure pour la transmission du courant vers un câble porté par la perche, par l'intermédiaire d'un shunt raccordé au berceau, caractérisée par le fait que le berceau comporte un corps principal présentant une face de support et de contact pour la partie inférieure du frotteur d'usure, et une partie mobile verrouillable sur le corps principal, ladite partie mobile étant articulée sur un axe porté par le corps principal dudit berceau et présentant une ouverture longitudinale pour le passage de la partie supérieure du frotteur d'usure, des moyens élastiquement déformables étant prévus pour le maintien du frotteur d'usure contre la face de support et de contact lorsque la partie mobile est verrouillée sur le corps principal.

En particulier, dans une première variante d'une telle tête de trolleybus, le frotteur d'usure présente en sa partie inférieure deux ailes longitudinales avec lesquelles coopère la partie mobile du berceau pour le maintien dudit frotteur d'usure sur la face de support et de contact, par l'intermédiaire des moyens élastiquement déformables.

De préférence, pour une bonne application du frotteur d'usure contre la face de support et de contact, les moyens élastiquement déformables comportent alors deux branches ondulées, une branche ondulée étant logée entre chaque aile longitudinale du frotteur d'usure et un rebord associé prévu sur la partie mobile du berceau au voisinage de l'ouverture longitudinale de celle-ci, lorsque ladite partie mobile est verrouillée sur le corps principal. Pour éviter tout risque de perte ou de mauvais positionnement des moyens élastiquement déformables, ces moyens constituent de préférence un élément unique, porté par la partie mobile du berceau.

Dans ce cas, l'élément unique constituant les moyens élastiquement déformables présente avantageusement une patte de liaison traversée par l'axe d'articulation de la partie mobile de berceau. Cet élément unique a alors une forme générale rectangulaire, avec un évidement correspondant au passage de la partie supérieure du frotteur d'usure.

En vue d'une qualité de contact élevée pour la transmission du courant par le frotteur d'usure, il est intéressant que le corps principal du berceau présente une face de support et de contact en pointes de diamant, ce qui n'était pas possible avec l'encastrement glissant prévu dans le cadre des techniques connues. Il pourra être prévu que le corps principal du berceau présente, à chaque extrémité de sa face de support et de contact, une butée assurant le maintien du frotteur d'usure dans une direction longitudinale.

La structure du frotteur d'usure et de la face de support et de contact associée rend possible une disposition particulièrement compacte et satisfaisante du shunt de liaison, lequel était raccordé à l'extrémité arrière du porte-frotteur : en particulier ici, le corps principal du berceau présente une portion centrale de connexion recevant l'extrémité du shunt qui arrive au berceau en passant par le centre de la liaison d'articulation dudit berceau.

Dans une deuxième variante d'une tête de trolleybus conforme à l'invention, la partie mobile du berceau est comme précédemment articulée par un axe sur le corps principal dudit berceau, mais ledit axe est monté sur ledit corps avec possibilité de débattement dans une direction sensiblement perpendiculaire à la face de support et de contact, ladite partie mobile présentant, au voisinage de l'ouverture longitudinale de celle-ci, un double rebord en contact direct avec les bords supérieurs latéraux du frotteur d'usure, et que les moyens élastiquement déformables comportent un organe ressort agissant sur l'axe d'articulation de façon à exercer sur la partie mobile du berceau un effort en vue du maintien du frotteur d'usure sur la face de support et de contact.

La première variante de la tête de trolleybus peut en effet, dans certaines applications, présenter quelques inconvénients, en particulier lorsque l'on choisit de réaliser les moyens élastiquement déformables sous forme d'un élément ressort comportant deux branches ondulées. Le maintien du frotteur d'usure est assuré, dans ce mode de réalisation particulier, par l'appui des deux branches ondulées sur une aile longitudinale associée prévue à la base dudit frotteur, grâce à l'action d'un double rebord longitudinal ménagé sur la partie mobile du berceau, chaque branche étant bordée supérieurement par le rebord de berceau et inférieurement par l'aile du frotteur d'usure. Or, au passage de certains types d'appareillages de lignes (pour les croisements, aiguillages ou déviations par example), le contact n'est plus assuré par le frotteur d'usure. Dans ce cas, le cheminement du courant se fait par les joues de la partie mobile du berceau dont la fonction est avant tout une fonction de guidage du câble de ligne de captation. Si l'on utilise un élément ressort à branches ondulées, cet élément peut alors être soumis à des surintensités, de l'ordre de 500 Ampères par exemple, pouvant entraîner la destruction dudit élément ressort.

Il est donc intéressant de pouvoir alors disposer d'une tête de trolleybus dans laquelle les joues de la partie mobile du berceau peuvent assurer le contact électrique lorsque ladite tête passe au niveau de tels appareillages de lignes, ce qui est obtenu avec la deuxième variante, dont la partie mobile est flottante grâce au débattement de son axe d'articulation.

En particulier, le corps principal du berceau comporte des paliers oblongs recevant les extrémités de l'axe d'articulation.

De préférence, l'organe ressort est un ressort de torsion monté sur le corps principal du berceau, et dont une branche au moins est en appui sur l'axe d'articulation; il est par ailleurs intéressant que l'axe d'articulation présente une arête vive sur laquelle prend appui la branche du ressort de torsion lorsque la partie mobile du berceau est en position de verrouillage.

Selon une possibilité avantageuse, les moyens élastiquement déformables comportent également un clip de verrouillage monté à l'autre extrémité de la partie mobile de berceau ; la partie mobile du berceau est alors doublement flottante.

Avantageusement, la face de support et de contact est essentiellement constituée par des lamelles de contact présentant une certaine élasticité, et disposées sur la face supérieure du corps principal du berceau ; de telles lamelles assurent un bon contact, tout en permettant un rattrapage des tolérances pour la face de contact du frotteur d'usure, issu de moulage ou de filage d'un profilé en aggloméré de carbone chargé. De préférence, les lamelles de contact se présentent sous la forme d'au moins une plaquette disposée dans une rainure longitudinale du corps principale du berceau ; en particulier, deux plaquettes sont prévues, disposées de part et d'autre d'une portion centrale de connexion du corps principal de berceau prévue pour recevoir l'extrémité d'un shunt passant par la liaison d'articulation du berceau.

L'invention concerne également un frotteur d'usure destiné à équiper une tête de trolleybus ainsi perfectionnée, ce frotteur étant caractérisé par le fait qu'il est constitué par un corps allongé de section transversale essentiellement constante, ladite section ayant sensiblement la forme d'un trapèze dont la petite base correspond à une face plane inférieure devant être appliquée contre la face de support et de contact du corps principal de berceau.

De préférence, le frotteur d'usure comporte deux facettes parallèles adjacentes aux bords supérieurs latéraux sur lesquels s'appuient les rebords associés de la partie mobile du berceau, puis deux faces inclinées rejoignant la face plane inférieure dudit frotteur d'usure ; en particulier, chacune des faces inclinées forme un angle d'environ 30° avec la facette adjacente.

D'autres avantages de l'invention apparaîtront plus clairement à la lumière de la description qui va suivre et des dessins anexés, illustrant un mode de réalisation particulier , en référence aux figures où :

- la figure 1 illustre en coupe une tête de trolleybus conforme à une première variante de l'invention, prête au fonctionnement, la position de remplacement du frotteur d'usure étant représentée en traits mixtes (partie mobile du berceau déverrouillée et basculée pour l'extraction instantanée du frotteur d'usure);
- la figure 2 est une coupe transversale de la tête de la figure 1, la plan de coupe passant au niveau de l'axe d'oscillation sensiblement vertical du berceau, permettant de mieux comprendre comment est réalisé le maintien du frotteur d'usure sur la face de support et de contact associée;
- la figure 3 est une vue en perspective d'un élément ressort, normalement porté par l'axe d'articulation de la partie mobile du berceau, dont la découpe permet un maintien correct du frotteur d'usure lorsque cette partie mobile est verrouillée sur le corps principal;
- la figure 4 illustre en coupe une tête de trolleybus conforme à une deuxième variante de l'invention, prête au fonctionnement, la position de remplacement du frotteur d'usure étant représentée en traits mixtes (partie mobile du berceau déverrouillée et basculée pour l'extraction instantanée du frotteur d'usure);
- la figure 5 est une coupe transversale de la tête de la figure 4, le plan de coupe passant au niveau de l'axe d'oscillation sensiblement vertical du berceau, permettant de mieux comprendre comment est réalisé le maintien du frotteur d'usure sur la face de support et de contact associé grâce à un appui direct de la partie mobile du berceau ;
- la figure 6 est une vue en plan d'un flasque latéral du corps principal de berceau, permettant en particulier de distinguer le palier oblong assurant un débattement de l'axe d'articulation de la partie mobile du berceau ;
- les figures 7 et 8 illustrent respectivement en vue en bout et de dessus la platine du corps principal de berceau recevant les lamelles de contact contre lesquelles le frotteur d'usure est maintenu ;
- les figures 9 et 10 sont des vues respectivement en plan et en bout d'un frotteur d'usure conforme à l'invention, destiné à équiper la tête de trolleybus perfectionnée illustrée aux figures précédentes ;
- la figure 11 est une vue de dessus, à l'échelle agrandie, du ressort de torsion agissant sur l'axe d'articulation de la partie mobile du berceau en vue du maintien du frotteur d'usure contre la face de support et de contact en position verrouillée ;
- la figure 12 illustre en coupe un détail d'une variante de la liaison entre perche et berceau, selon laquelle une articulation supplémentaire permet un effacement dudit berceau dans le cas où la tête de trolleybus s'échapperait de la ligne de captation et viendrait heurter une transversale portant cette ligne, et la figure 13 est la coupe correspondante selon XIII-XIII.

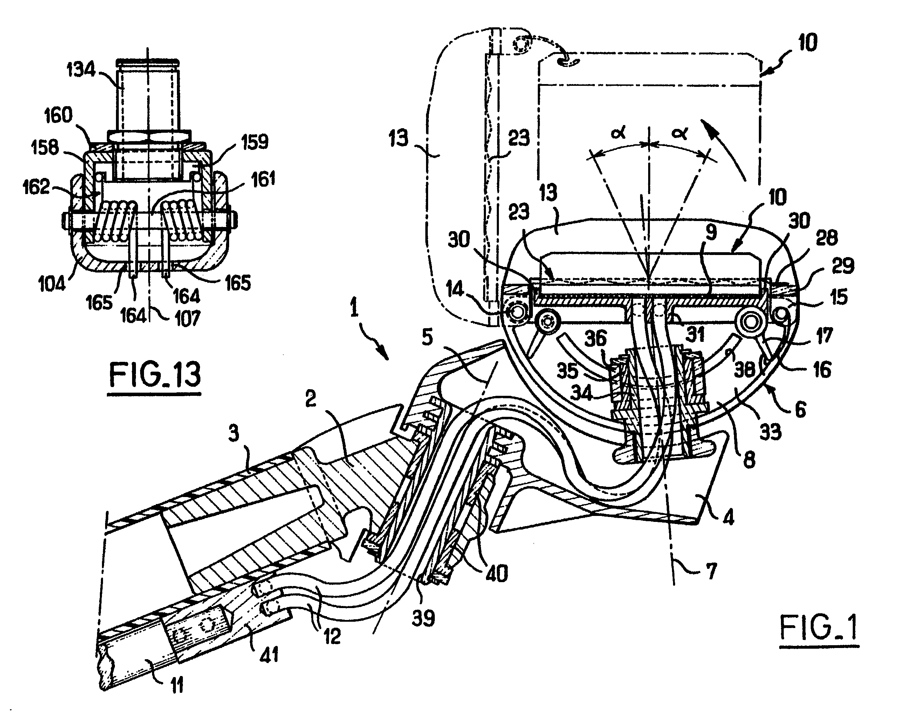

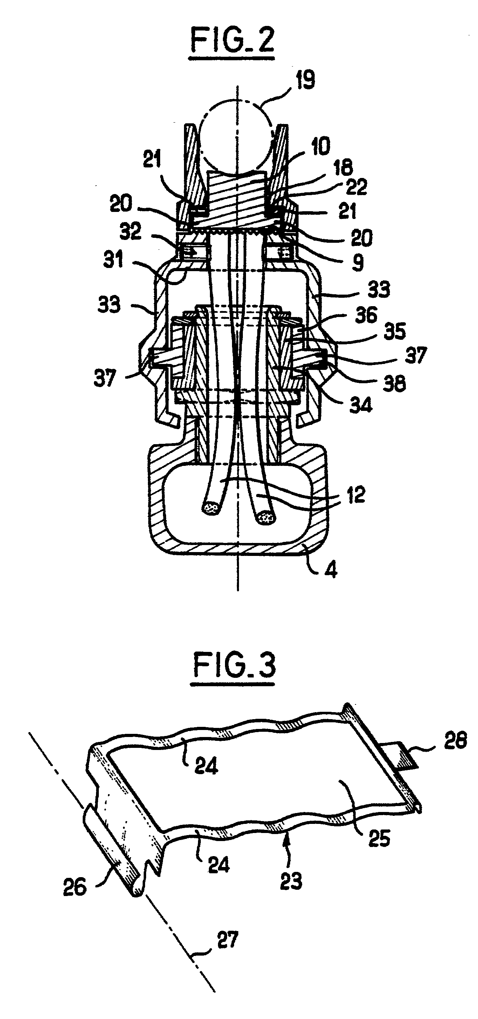

Les figures 1 et 2 illustrent une tête de trolleybus conforme à l'invention, telle que montée en bout de perche du trolleybus.

Conformément aux techniques classiques, la tête 1 présente un certain nombre d'organes constitutifs dont la disposition permet plusieurs degrés de liberté par rapport à la perche. On trouve ainsi un corps d'embout de perche 2, habituellement réalisé en une pièce moulée en aluminium, monté coaxialement (par collage ou autre moyen) sur l'extrémité d'un tube isolant 3 figurant l'extrémité de la perche dont le reste n'est pas représenté. Sur le corps d'embout de perche 2 est articulée une pièce 4, habituellement dénommée corps de berceau, pouvant pivoter autour d'un axe oblique 5, sur une plage angulaire prédéterminée (des butées non représentées limitent en principe ce pivotement à 90° de part et d'autre de la position médiane correspondant à une perche située dans le plan vertical de la ligne de captation). Sur la pièce 4 est monté un berceau 6 avec une liaison permettant une oscillation autour d'un axe sensiblement vertical 7, avec des butées non représentées pour limiter la plage angulaire d'oscillations, ledit berceau 6 pouvant également basculer autour d'un axe sensiblement horizontal. On notera que la liaison entre le berceau 6 et la pièce corps de berceau 4 n'est pas une liaison à rotule comme c'était fréquemment le cas dans les techniques antérieures, mais définit au contraire deux axes d'articulation déterminés, ce qui présente certains avantages sur lesquels on reviendra plus loin. A titre indicatif, les axes d'articulation 5, 7 forment entre eux un angle compris entre 15° et 25°, de façon à obtenir un comportement satisfaisant de la tête de trolleybus, même en cas de virage serré.

Conformément à un aspect essentiel de l'invention, le berceau 6 comporte un corps principal 8 présentant une face de support et de contact 9 pour la partie inférieure d'un frotteur d'usure 10, lequel est utilisé pour la transmission du courant vers un câble 11 porté par la perche, par l'intermédiaire d'un shunt 12 raccordé au berceau ; ledit berceau comporte également une partie mobile 13 articulée, verrouillable sur le corps principal 8, et présentant une overture longitudinale pour le passage de la partie supérieure du frotteur d'usure 10.

Ainsi, lorsque la partie mobile 13 est déverrouillée et dégagée du corps principal 8 du berceau, l'opérateur a un accès instantané au frotteur d'usure 10, ce qui permet un remplacement très rapide de celui-ci, tandis qu'en position de verrouillage de cette partie mobile, ledit frotteur d'usure 10 est parfaitement maintenu contre la face de support et de contact 9, par l'intermédiaire de moyens élastiquement déformables qui seront décrits plus en détail en référence à la figure 3, qui en donne une illustration particulièrement intéressante pour l'application considérée.

Du fait d'un montage du frotteur d'usure sans encastrement, ledit frotteur peut être aisément réalisé à partir d'un profilé de section uniforme, cette section apparaissant plus nettement sur la figure 2, ce qui permet d'avoir un mode de fabrication économique grâce à l'utilisation de techniques telles que le filage. Pour procéder au remplacement de ce frotteur d'usure, il suffit donc à l'opérateur de déverrouiller la partie mobile du berceau pour dégager à la main le frotteur d'usure à remplacer, et mettre en place instantanément un nouveau frotteur avant de verrouiller de nouveau ladite partie mobile : ces opérations sont donc particulièrement faciles pour l'opérateur, qui peut procéder au remplacement de la pièce d'usure dans un temps très court, et sans aucun outillage.

Le mode de réalisation illustré ici comporte une partie mobile 13 de berceau articulée sur un axe fixe 14 porté par le corps principal 8 dudit berceau ; la pièce mobile 13 présente une configuration symétrique, avec une paire d'oreilles 15 à chacune de ses extrémitées, une paire étant prévue pour l'articulation, tandis que l'autre est prévue pour porter une patte de verrouillage élastique 16 pouvant coopérer en position de verrouillage avec une moulure 17 ménagée à cet effet sur le corps principal du berceau. La partie mobile du berceau présente une ouverture longitudinal 18, sensiblement rectangulaire, pour le passage de la partie supérieure du frotteur d'usure entre les deux flasques de la partie mobile prévues,conformément à l'habitude,pour le guidage latéral par rapport à la ligne de captation 19, ainsi que cela ressort plus clairement de la figure 2.

Le frotteur d'usure 10 présente ainsi en sa partie inférieure deux ailes longitudinales 20 définissant, vers le bas, la face dudit frotteur destinée à être appliquée contre la face de support et de contact 9, et, vers le haut, deux faces d'appui 21 qui reçoivent la force d'application des moyens élastiquement déformables qui sont disposés entre ces faces d'appui, et un rebord associé 22 prévu sur la partie mobile du berceau au voisinage de l'ouverture longitudinale 18.

Les moyens élastiquement déformables sont avantageusement constitués par un élément unique 23 dont la forme est illustrée en perspective à la figure 3. Cet élément unique comporte deux branches ondulées 24 qui sont logées, en position de verrouillage de la partie mobile du berceau, entre les ailes longitudinales 20 du frotteur d'usure et les rebords 22 précités de ladite partie mobile. L'élément unique présente ainsi une forme générale rectangulaire, avec un évidement 25 correspondant au passage de la partie supérieure du frotteur d'usure, et, d'un côté, une patte de liaison 26 traversée par l'axe d'articulation de la partie mobile du berceau (schématisé par l'axe 27 sur la figure 3), et de l'autre côté une patte 28 permettant le maintien en position dudit élément 23 par un appui sur une portion transversale 29 de la partie mobile (visible sur la figure 1). Ce mode de réalisation des moyens élastiquement déformables est particulièrement simple et efficace dans l'application considérée, l'élément unique 23 étant ainsi monté à demeure sur la partie mobile du berceau, s'articulant avec celle-ci autour de l'axe 14, tout en présentant un certain débattement longitudinal permettant d'absorber une longueur excédentaire en position de verrouillage, grâce à l'appui glissant de la patte 28. Il n'y a ainsi aucun risque de perte de l'élément 23 au dégagement de la partie mobile du berceau, ni de mauvais positionnement dudit élément par rapport au frotteur d'usure, lorsque ladite partie mobile est rabattue pour son verrouillage. Il suffit donc pour l'opérateur de dégager la patte élastique 16 et de relever la partie mobile du berceau, pour avoir un accès direct et instantané au frotteur d'usure.

Le frotteur d'usure 10 est ainsi parfaitement positionné sur la face de support et de contact 9 du corps principal du berceau, avantageusement entre deux butées 30 dont la fonction est d'assurer le maintien dudit frotteur dans une direction longitudinale. Le fait que le frotteur d'usure 10 soit simplement posé sur la face de support et de contact 9 permet une réalisation de ladite face en pointes de diamant, disposition qui ne pouvait être adoptée avec la conception ancienne d'un encastrement glissant dudit frotteur d'usure. Les pointes de diamant viennent s'incruster légèrement dans la face en regard du frotteur d'ussure, et la multiplicité des points de contact obtenus assure une excellente transmission du courant entre ledit frotteur d'usure et le berceau ; ces pointes permettent de plus un rattrapage des tolérances pour la face de contact du frotteur d'usure, issu de moulage ou de filage d'un profilé en aggloméré de carbone chargé. La répartition régulière de ces points aura naturellement un effet favorable d'un point de vue thermique, l'échauffement au niveau du contact étant également réparti pour l'ensemble du frotteur d'usure.

La structure du frotteur d'usure et de la face de support et de contact associée rend possible une disposition particulièrement avantageuse par sa compacité pour le shunt de liaison 12: le corps principal 8 du berceau présente en effet une portion centrale de connexion 31 pour le serrage des extrémités du shunt 12 au moyen de vis 32, ces extrémités s'étendant ainsi entre les flasques latéraux 33 du corps principal de berceau, puis dans l'alésage d'une douille 34 de la liaison articulée dudit berceau sur la pièce 4. Par ailleurs, on notera que cette douille 34 est entourée par un manchon 35, intérieur à une douille de guidage 36 dont la surface extérieure présente, de chaque côté, une rainure circulaire saillante 37 reçue dans une gorge correspondante 38, ménagée sur le flasque associé 33 vers l'intérieur du corps principal du berceau. Les pièces de frottement 35, 36 peuvent naturellement être réalisées en une pièce unique, par exemple à partir d'un matériau tel que celui commercialisé sous la dénomination ERTAFLUOR, qui présente de bonnes caractéristiques de glissement à des températures pouvant dépasser 120° C.

Selon le même principe, la partie centrale du shunt 12 passera à l'intérieur d'un manchon central 39 (en acier inoxydable de préférence), au niveau de la liaison d'articulation avec le corps d'en bout de perche 2. Ce manchon 39, incorporé lors de la réalisation en fonderie de la partie corps de berceau 4, reçoit extérieurement deux douilles de frottement 40, de préférence, en un matériau présentant de bonnes caractéristiques de glissement, tel que celui commercialisé sous la dénomination ERTALON, car il suffit ici de supporter des températures ne dépassant pas 70° C. L'extrémité du shunt 12 se raccorde enfin sur une pièce de jonction électrique 41 assurant la connexion avec le câble 11.

La tête de trolleybus, ainsi réalisée conformément à l'invention, permet un démontage rapide et aisé, sans outils particuliers, pour le remplacement du frotteur d'usure, lequel peut être réalisé de façon particulièrement économique, sans nuire aucunement au contact électrique obtenu.

Il va de soi que diverses modifications pourraient être apportées au mode de réalisation représenté : en particulier, la section transversale du frotteur d'usure peut différer de celle représentée à la figure 2, et les moyens élastiquement déformables peuvent aussi présenter des structures sensiblement différentes de celle illustrée à la figure 3. On pourra également utiliser une structure différente pour les liaisons d'articulation traversées par le shunt, et plus particulièrement celle du berceau portant le frotteur d'usure, en prévoyant par exemple des douilles à lamelles ressorts de contact capables de transmettre du courant : ceci permet en particulier d'éviter une transmission du courant par le ressort, lorsque la partie mobile du berceau est seule en contact avec la ligne de captation (cas des croisements ou aiguillages).

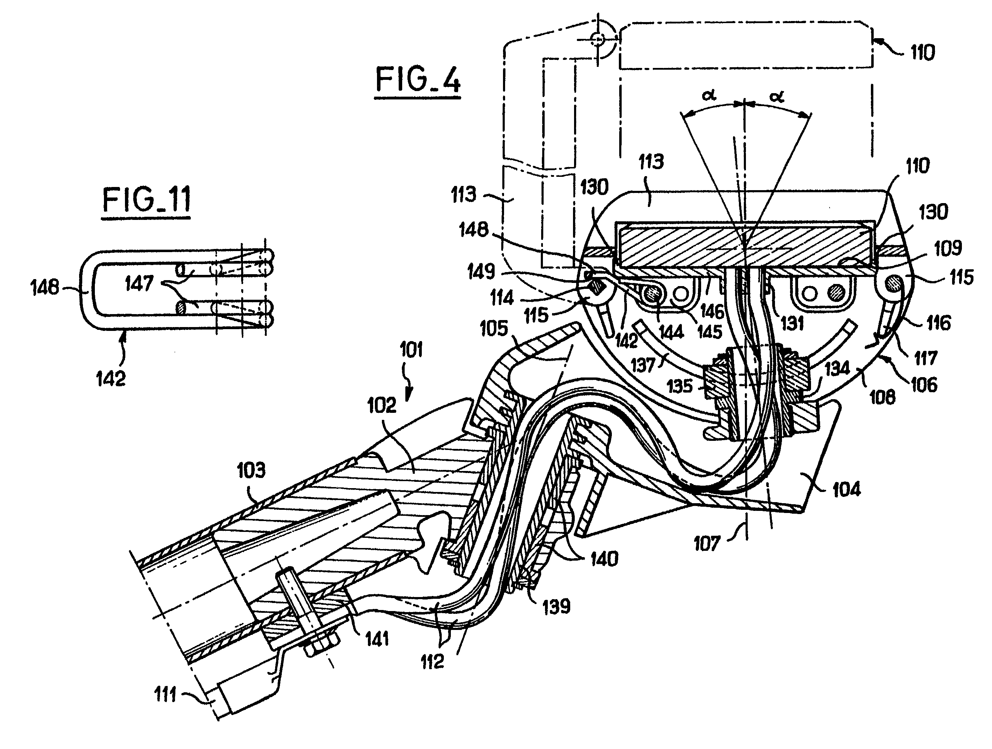

La deuxième variante de la tête de trolleybus qui va maintenant être décrite en référence aux figures 4 à 13, comporte un certain nombre d'organes constitutifs analogues à ceux formant la tête de trolleybus qui vient d'être décrite. Par mesure de simplicité, les références utilisées pour ces organes dans la suite de la description correspondront aux références de la variante précédente augmentées du nombre 100.

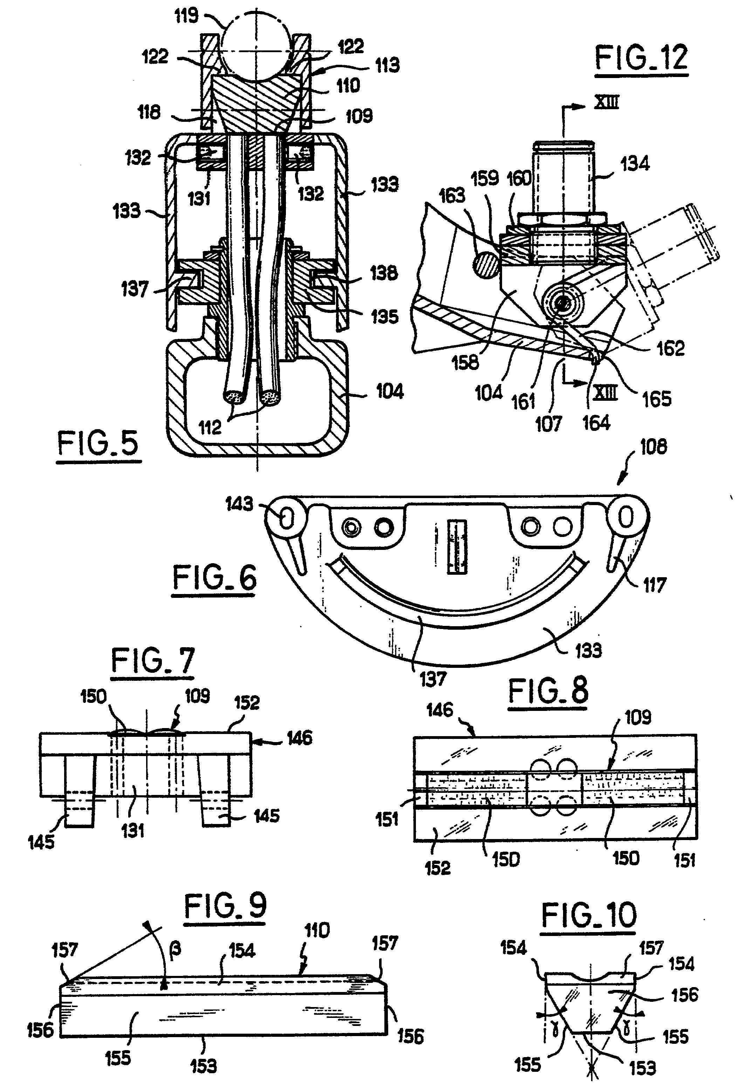

Figures 4 et 5, la tête 101 comporte un corps d'embout de perche 102 monté à l'extrémité d'un tube isolant 103 ; sur ce corps d'embout de perche 102 est articulé un corps de berceau 104 pouvant pivoter autour d'un axe oblique 105, sur une plage angulaire prédéterminée. Sur la pièce 104 est monté un berceau 106 avec une liaison permettant une oscillation autour d'un axe sensiblement vertical 107, ledit berceau 106 pouvant également basculer autour d'un axe sensiblement horizontal.

Le berceau 106 comporte un corps principal 108 présentant une face de support et de contact 109 (sur laquelle il sera revenu ultérieurement) pour la face inférieure d'un frotteur d'usure 110, lequel est utilisé pour la transmission du courant vers un câble 111 porté par la perche, par l'intermédiaire d'un shunt 112 raccordé au berceau ; ledit berceau comporte également une partie mobile 113 articulée sur un axe 114 porté par le corps principal 108, et présentant une ouverture longitudinale pour le passage de la partie supérieure du frotteur d'usure 110. La pièce mobile 113 est de configuration symétrique, avec une paire d'oreilles 115 à chacune de ses extrémités, une paire étant prévue pour l'articulation, tandis que l'autre est prévue pour porter une patte de verrouillage élastique 116 pouvant coopérer en position de verrouillage avec une moulure 117 ménagée à cet effet sur le corps principal du berceau.

Conformément à un aspect essentiel de la structure de cette tête de trolleybus, l'axe d'articulation 114 de la partie mobile du berceau est monté sur le corps principal 108 avec possiblité de débattement dans une direction sensiblement perpendiculaire à la face de support et de contact 109, la partie mobile 113 du berceau présentant, au voisinage de l'ouverture longitudinale 118 de celle-ci, un double rebord 122 en contact direct avec les bords supérieurs latéraux du frotteur d'usure 110 ; comme dans la variante précédente, les moyens élastiquement déformables sont prévus pour le maintien du frotteur d'usure 110 contre la face de support et de contact lorsque la partie mobile est verrouillée sur le corps principal, mais ces moyens comportent ici un organe ressort 142 agissant sur l'axe d'articulation 114 de façon à exercer sur la partie mobile 113 du berceau l'effort de maintien désiré.

Ainsi que cela est mieux visible sur la figure 6, chacun des deux flasques latéraux 133 du corps principal 108 comporte ainsi un palier oblong 143 recevant l'extrémité associée de l'axe d'articulation 114. Il est à noter que ce flasque 133 est de réalisation symétrique, pour en simplifier la fabrication et éviter tout risque d'erreur au montage : on trouve ainsi un palier oblong 143 et une moulure 117 à chacune des extrémités du flasque, étant entendu que le palier oblong est indispensable au niveau de l'axe d'articulation 114 seulement, et que la moulure 117 est quant à elle indispensable pour coopérer avec le clip de verrouillage 116.

Un tel montage confère à la partie mobile 113 un caractère flottant extrêmement intéressant, car c'est lui qui permet un appui direct par les rebords 122 sur le frotteur 110, ainsi que cela est particulièrement visible sur la figure 5. On conçoit aisément que, en cas d'interruption du contact électrique avec le frotteur 110 lorsque la tête passe au niveau d'appareillages de lignes du type mentionné plus haut, les joues de la partie mobile 113 assurent le cheminement direct du courant vers le frotteur 110, sans passer par un élément intermédiaire tel que l'élément ressort à branches ondulées 23 de la variante précédente. Les joues de la partie mobile 113 assurent ainsi une double fonction, c'est-à-dire le guidage de la ligne de captation 119, et le contact électrique pour le cheminement direct du courant.

La figure 11 illustre un mode de réalisation possible pour le ressort de torsion 142 monté sur le corps principal 108 du berceau. Ce ressort est monté sur un axe 144 traversant les oreilles 145 d'une platine146 disposée entre les flasques latéraux 133 et dont la partie supérieure 109 constitue la face de support et de contact pour le frotteur d'usure 110. Ainsi montées, les deux branches libres d'extrémité 147 du ressort 142 sont en appui contre la face inférieure de la platine 146, tandis que la branche 148 exerce en permanence une pression d'application dirigée vers le bas sur l'axe d'articulation 114. Le ressort 142 tend ainsi toujours à déplacer l'axe 114 vers la partie inférieure du palier oblong 143. On a illustré ici un axe d'articulation 114 de section carrée : cet axe présente ainsi une arête vive 149 sur laquelle prend appui la branche 148 du ressort de torsion lorsque la partie mobile 113 du berceau est en position de verrouillage ; ceci définit un cran qui facilite le dégagement de la partie mobile du berceau et évite une retombée de celle-ci sur les mains de l'opérateur occupé à manipuler le frotteur d'usure.

Selon une possibilité avantageuse, l'organe de verrouillage de la partie mobile, qui est ici un clip 116, présente une capacité suffisante de déformation élastique pour remplir également, comme le ressort de torsion 142 mais dans une moindre mesure, une fonction de maintien élastique du frotteur d'usure 110 sur la face de support et de contact 109 lorsque la partie mobile est verrouillée sur le corps principal. La partie mobile du berceau est alors doublement flottante.

La face de support et de contact 109 est avantageusement constituée par des lamelles de contact présentant une certaine élasticité, et disposée sur la face supérieure du corps principal du berceau. Ainsi qu'illustré aux figures 7 et 8, deux plaquettes 150 sont disposées dans une rainure longitudinale 151 de la platine 146 du corps principal du berceau ; ces deux plaquettes sont disposées de part et d'autre d'une portion centrale de connexion 131 du corps principal de berceau prévue pour recevoir l'extrémité du shunt 112 passant par les liaisons d'articulation du berceau. Ces lamelles de contact donnent de meilleurs résultats que les pointes de diamant prévues sur la face de support de contact de la tête conforme à la variante précédente : leur souplesse assure à la fois un bon contact, et permet un rattrapage des tolérances pour la face de contact du frotteur d'usure, lequel est issu de moulage ou de filage d'un profilé en aggloméré de carbone chargé.

Le frotteur d'usure 110 est ainsi parfaitement positionné sur la face de support et de contact 109, par exemple entre deux butées 130 dont la fonction est d'assurer le maintien dudit frotteur dans une direction longitudinale (on pourrait naturellement prévoir une face supérieure parfaitement plane 152 pour la platine 146, ainsi qu'illustré aux figures 7 et 8, auquel cas le maintien du frotteur peut être simplement assuré par deux nervures transversales ménagées sur la partie mobile 113 du berceau, ce que facilite l'usinage de la rainure 151).

Comme dans la variante précédente, les extrémités du shunt 112 sont fixées au moyen de vis 132 sur la portion centrale de connexion 131, ces extrémités s'étendant ainsi entre les flasques latéraux 133 du corps principal, puis dans l'alésage d'une douille 134 de la liaison articulée du berceau sur la pièce 104 ; cette douille 134 est par ailleurs entourée par une pièce 135 dont la surface extérieure présente de chaque côté une gorge circulaire 138 dans laquelle passe une rainure circulaire saillante 137 ménagée sur chacun des flasques latéraux 133 (on notera que, dans la variante précédente, la disposition était inversée, avec une gorge sur chaque flasque latéral et une rainure circulaire sur la pièce mobile). La partie centrale du shunt 112 passe ensuite à l'intérieur d'un manchon 139 au niveau de la liaison d'articulation avec le corps d'embout de perche 102, ledit manchon recevant extérieurement deux douilles de frottement 140 ; l'extrémité du shunt 112 se raccorde enfin sur une pièce de jonction électrique 141 assurant la connexion avec le câble 111.

Les figures 9 et 10 illustrent la structure d'un frotteur d'usure destiné à équiper la tête de trolleybus qui vient d'être décrite. Ce frotteur est constitué par un corps allongé de section transversale essentiellement constante, ladite section ayant ici la forme d'un trapèze dont la petite base correspond à une face plane inférieure 153 qui doit être appliquée contre la face de support et de contact du corps principal du berceau. La forme de cette section transversale est doublement intéressante : d'abord elle réduit la surface du frotteur en appui direct sur les lamelles, ce qui permet de s'assurer que la face inférieure 153 est toujours en contact avec les lamelles sans reposer sur la face supérieure adjacente 152 de la platine ; de plus, il est possible de réaliser une économie de matière d'au moins 20 %, tout en ayant un comportement optimal du frotteur à l'usure grâce au parallélisme de facettes latérales.

Le frotteur comporte ainsi deux facettes parallèles 154 adjacentes aux bords supérieurs latéraux sur lesquels s'appuient les rebords 122 de la partie mobile 113 en position de verrouillage, puis deux faces inclinées 155 rejoignant la face plane inférieure 153. Chacune des faces inclinées 155 forme de préférence un angle d'environ 30° avec la facette 154 adjacente (angle $\gamma$ sur la figure 10). Les faces d'extrémité 156 sont quant à elles essentiellement planes et perpendiculaires à la direction générale du corps allongé, à l'exception de leur bord supérieur 157 qui est avantageusement incliné par rapport à cette direction, selon un angle $\beta$ (figure 9) qui est ici d'environ 30°.

Comme pour la variante précédente, la tête de trolleybus ainsi réalisée permet un démontage rapide et aisé, sans outils particuliers, pour le remplacement du frotteur d'usure, lequel peut être réalisé de façon particulièrement économique, sans nuire aucunement au contact électrique obtenu.

Il va de soi que diverses modifications pourraient être apportées au mode de réalisation représenté : en particulier, la section transversale du frotteur d'usure peut différer de celle représentée à la figure 10, et les moyens élastiquement déformables peuvent aussi présenter des structures sensiblement différentes de celles illustrées aux figures 7 et 8. On pourra enfin également utiliser une structure différente pour les liaisons d'articulation traversées par le shunt, et plus particulièrement celles du berceau portant le frotteur d'usure.

Sur les figures 12 et 13, on a illustré une variante de la liaison entre le berceau 106 et la pièce 104, et plus particulièrement au niveau de la douille 134 visible en figure 4. Selon cette variante, la douille 134 présente un degré de liberté supplémentaire, grâce à un montage articulé sur la pièce 104. La douille 134 est en effet montée sur un cavalier 158 en forme de U renversé au moyen d'un écrou 159 et d'une rondelle 160 ; le cavalier 158 est monté oscillant sur un axe fixe 161, et un ressort 162 assure le maintien dudit cavalier contre une butée transversale 163. Le ressort 162 est ici un ressort de torsion monté sur l'axe fixe 161, et dont les deux branches d'extrémité 164 sont chacune reçues dans une encoche associée 165 prévue sur la pièce 104, mais on pourrait aussi bien utiliser un système de cliquet à bille avec ressort taré travaillant en compression. De cette façon, si la tête de trolleybus s'échappe de la ligne associée, le moindre choc avec une transversale qui porte cette ligne provoque automatiquement l'effacement de la tête (voir la position schématisée en traits mixtes sur la figure 12), écartant ainsi tout risque de rupture de pièce (la pièce 135 de la tête par exemple) ou pire encore d'arrachement de la transversale ou de la ligne.

## Revendications

1. Tête de trolleybus (1, 101), comportant un corps de berceau (4, 104) monté pivotant en bout de perche (2, 102), un berceau (6, 106) monté sur le corps (8, 108) de berceau avec une liaison permettant une oscillation autour d'un axe sensiblement vertical (7, 107) et un basculement autour d'un axe sensiblement horizontal, ledit berceau (6, 106) recevant un frotteur d'usure (10, 110) pour la transmission du courant vers un câble (11, 111) porté par la perche (2, 102), par l'intermédiaire d'un shunt (12, 112) raccordé au berceau (6, 106), caractérisée par le fait que le berceau (6, 106) comporte un corps principal (8, 108) présentant une face de support et de contact (9, 109) pour la partie inférieure du frotteur d'usure (10, 110), et une partie mobile (13, 113) verrouillable sur le corps principal, ladite partie mobile étant articulée sur un axe (14, 114) porté par le corps principal (8, 108) et présentant une ouverture longitudinale (18, 118) pour le passage de la partie supérieure du frotteur d'usure (10, 110), des moyens élastiquement déformables (23, 142) étant prévus pour le maintien du frotteur d'usure contre la face de support et de contact lorsque la partie mobile est verrouillée sur le corps principal.

2. Tête de trolleybus selon la revendication 1, caractérisée par le fait que le frotteur d'usure (10) présente en sa partie inférieure deux ailes longitudinales (20) avec lesquelles coopère la partie mobile (13) du berceau pour le maintien dudit frotteur d'usure sur la face de support et de contact (9), par l'intermédiaire des moyens élastiquement déformables.

3. Tête de trolleybus selon la revendication 2, caractérisée par le fait que les moyens élastiquement déformables comportent deux branches ondulées (24), une branche ondulée étant logée entre chaque aile longitudinale (20) du frotteur d'usure et un rebord (22) associé prévu sur la partie mobile du berceau au voisinage de l'ouverture longitudinale de celle-ci, lorsque ladite partie mobile est verrouillée sur le corps principal.

4. Tête de trolleybus selon la revendication 3, caractérisée par le fait que les moyens élastiquement déformables constituent un élément unique (23) porté par la partie mobile du berceau.

5. Tête de trolleybus selon la revendication 4, caractérisée par le fait que l'élément unique (23) présente une patte de liaison (26) traversée par l'axe d'articulation de la partie mobile du berceau.

6. Tête de trolleybus selon la revendication 5, caractérisée par le fait que l'élément unique (23) a une forme générale rectangulaire, avec un évidement (25) correspondant au passage de la partie supérieure du frotteur d'usure.

7. Tête de trolleybus selon l'une des revendications 1 à 6, caractérisée par le fait que le corps principal du berceau présente une face de support et de contact (9) en pointes de diamant.

8. Tête de trolleybus selon l'une des revendications 1 à 7, caractérisée par le fait que le corps principal (8) du berceau présente, à chaque extrémité de sa face de support et de contact (9), une butée (30) assurant le maintien du frotteur d'usure dans une direction longitudinale.

9. Tête de trolleybus selon l'une des revendications 1 à 8, caractérisée par le fait que le corps principal du berceau présente une portion centrale de connexion (31) recevant l'extrémité d'un shunt (12) passant par la liaison d'articulation du berceau.

10. Tête de trolleybus selon la revendication 1, caractérisée par le fait que la partie mobile (113) du berceau (106) est articulée par un axe (114) sur le corps principal (108) dudit berceau, ledit axe étant monté sur ledit corps avec possibilité de débattement dans une direction sensiblement perpendiculaire à la face de support et de contact (109), ladite partie mobile présentant, au voisinage de l'ouverture longitudinale (118) de celle-ci, un double rebord (122) en contact direct avec les bords supérieurs latéraux du frotteur d'usure (110), et que les moyens élastiquement déformables comportent un organe ressort (142) agissant sur l'axe d'articulation (114) de façon à exercer sur la partie mobile (113) du berceau un effort en vue du maintien du frotteur d'usure (110) sur la face de support et de contact (109).

11. Tête de trolleybus selon la revendication 10, caractérisée par le fait que le corps principal (108) du berceau (106) comporte des paliers oblongs (143) recevant les extrémités de l'axe d'articulation (114).

12. Tête de trolleybus selon l'une des revendications 10 et 11, caractérisée par le fait que l'organe ressort est un ressort de torsion (142) monté sur le corps principal (108) du berceau, et dont une branche (148) au moins est en appui sur l'axe d'articulation (114).

13. Tête de trolleybus selon la revendication 12, caractérisée par le fait que l'axe d'articulation (114) présente une arête vive (149), sur laquelle prend appui la branche (148) du ressort de torsion (142) lorsque la partie mobile (113) du berceau est en position de verrouillage.

14. Tête de trolleybus selon l'une des revendications 10 à 13, caractérisée par le fait que les moyens élastiquement déformables comportent également un clip de verrouillage (116) monté à l'autre extrémité de la partie mobile (113) du berceau.

15. Tête de trolleybus selon l'une des revendications 10 à 14, caractérisée par le fait que la face de support et de contact est essentiellement constituée par des lamelles de contact (150) présentant une certaine élasticité, et disposées sur la face supérieure du corps principal (108) du berceau.

16. Tête de trolleybus selon la revendication 15, caractérisée par le fait que les lamelles de contact se présentent sous la forme d'au moins une plaquette (150) disposée dans une rainure longitudinale (151) du corps principal (108) du berceau.

17. Tête de trolleybus selon la revendication 16, caractérisée par le fait que deux plaquettes (150) sont prévues, disposées de part et d'autre d'une portion centrale de connexion (131) du corps principal de berceau prévue pour recevoir l'extrémité d'un shunt (112) passant par la liaison d'articulation du berceau.

18. Tête de trolleybus selon l'une des revendications 10 à 17, caractérisée par le fait qu'elle comporte en outre des moyens (158, 162) pour effacer le berceau en cas de choc lorsque ladite tête s'échappe de la ligne de captation.

19. Tête de trolleybus selon la revendication 18, caractérisée par le fait que la douille d'articulation (134) du berceau est montée sur un cavalier (158) pouvant basculer sur un axe fixe (161), ledit cavalier étant normalement maintenu en appui contre une butée (163) par des moyens élastiques (162).

20. Tête de trolleybus selon la revendication 19, caractérisée par le fait que les moyens élastiques sont constitués par un ressort de torsion (162) monté sur l'axe fixe (161).

21. Frotteur d'usure destiné à équiper une tête de trolleybus selon l'une quelconque des revendications 10 à 20, , caractérisé par le fait qu'il est constitué par un corps allongé (110) de section transversale essentiellement constante, ladite section ayant sensiblement la forme d'un trapèze sont la petite base correspond à une face plane inférieure (153) devant être appliquée contre la face de support et de contact du corps principal de berceau.

22. Frotteur d'usure selon la revendication 21, caractérisé par le fait qu'il comporte deux facettes parallèles (154) adjacentes aux bords supérieurs latéraux sur lesquels s'appuient les rebords associés de la partie mobile (113) du berceau, puis deux faces inclinées (155) rejoignant la face plane inférieure dudit frotteur d'usure.

23. Frotteur d'usure selon la revendication 22, caractérisé par le fait que chacune des faces inclinées (155) forme un angle d'environ 30° avec la facette adjacente (154).

**Patentansprüche**

1. Stromabnehmerkopf (1, 101) für Oberleitungsbus, mit einem Wippengehäuse (4, 104), das schwenkbeweglich am Ende einer Stange (2, 102) angeordnet ist, einer Wippe (6, 106), die auf dem Gehäuse (8, 108) der Wippe mit einer Verbindung angeordnet ist, die eine Schwingung um eine im wesentlichen vertikale Achse (7, 107) und ein Kippen bzw. Schaukeln um eine im wesentlichen horizontale Achse erlaubt, wobei die Wippe (6, 106) eine verschleißende Schleiffeder (10, 110) für die Übertragung von Strom auf ein Kabel (11, 111) aufnimmt, das von der Stange (2, 102) getragen wird, mittels eines Shunts (12, 112), der an der Wippe (6, 106) angeordnet ist, dadurch gekennzeichnet, daß die Wippe (6, 106) einen Hauptkörper (8, 108) aufweist, der eine Stütz- und Kontaktfläche (9, 109) für den unteren Bereich der verschleißenden Schleiffeder (10, 110) und eine beweglichen Bereich (13, 113) aufweist, der auf dem Hauptkörper verriegelbar ist, wobei der bewegliche Bereich auf einer Achse (14, 114) angelenkt ist, die von dem Hauptkörper (8, 108) getragen wird, und eine Längsöffnung (18, 118) für den Hindurchtritt des oberen Bereichs der verschleißenden Schleiffeder (10, 110) aufweist, wobei elastisch verformbare Einrichtungen (23, 142) vorgesehen sind, für das Halten der verschleißenden Schleiffeder gegen die Stütz- und Kontaktfläche, wenn der bewegliche Bereich auf dem Hauptkörper verriegelt ist.

2. Stromabnehmerkopf für Oberleitungsbus nach Anspruch 1, dadurch gekennzeichnet, daß die verschleißende Schleiffeder (10) an ihrem unteren Bereich zwei Längsschenkel (20) aufweist, mit denen der bewegliche Bereich (13) der Wippe für das Halten der genannten verschleißenden Schleiffeder auf der Stütz- und Kontaktfläche (9) mittels deformierbaren elastischen Einrichtungen zusammenwirkt.

3. Stromabnehmerkopf für Oberleitungsbus nach Anspruch 2, dadurch gekennzeichnet, daß die deformierbaren elastischen Mittel zwei gewellte Zweige (24) aufweist, wobei ein gewellter Zweig zwischen jedem Längsschenkel (20) der verschleißenden Schleiffeder und einem zugeordneten Rand (22) angeordnet ist, der auf dem beweglichen Bereich der Wippe in der Nähe der Längsöffnung von dieser vorgesehen ist, wenn der bewegliche Bereich auf dem Hauptkörper verriegelt ist.

4. Stromabnehmerkopf für Oberleitungsbus nach Anspruch 3, dadurch gekennzeichnet, daß die elastisch deformierbaren Einrichtungen ein einzelnes Element (23) bilden, das durch den bewegbaren Bereich der Wippe getragen wird.

5. Stromabnehmerkopf für Oberleitungsbus nach Anspruch 4, dadurch gekennzeichnet, daß das einzelne Element (23) eine Verbindungszunge (26) aufweist, die von der Gelenkachse des beweglichen Bereiches der Wippe durchquert wird.

6. Stromabnehmerkopf für Oberleitungsbus nach Anspruch 5, dadurch gekennzeichnet, daß das einzelne Element (23) eine im wesentlichen rechtwinklige Form aufweist, mit einer Ausnehmung (25) entsprechend dem Kanal des oberen Bereiches der verschleißenden Schleiffeder.

7. Stromabnehmerkopf für Oberleitungsbus nach einem der Ansprüche 1 bis 6, dadurch gekennzeichnet, daß der Hauptkörper der Wippe eine Stütz- und Kontaktfläche (9) aus Diamantspitzen aufweist.

8. Stromabnehmerkopf für Oberleitungsbus nach einem der Ansprüche 1 bis 7, dadurch gekennzeichnet, daß der Hauptkörper (8) der Wippe an jedem Ende seiner Stütz- und Kontaktfläche (9) einen Anschlag (30) aufweist, der das Halten der verschleißenden Schleiffeder in eine Längsrichtung sicherstellt.

9. Stromabnehmerkopf für Oberleitungsbus nach einem der Ansprüche 1 bis 8, dadurch gekennzeichnet, daß der Hauptkörper der Wippe einen zentralen Verbindungsbereich (31) aufweist, der das Ende eines Shunts (12) aufnimmt, der durch die Gelenkverbindung der Wippe geht.

10. Stromabnehmerkopf für Oberleitungsbus nach Anspruch 1, dadurch gekennzeichnet, daß der bewegliche Bereich (113) der Wippe (106) durch eine Achse (114) an dem Hauptkörper (108) der Wippe angelenkt ist, wobei die genannte Achse auf dem genannten Körper mit der Möglichkeit der Ausfederung in eine Richtung im wesentlichen senkrecht zur Stütz- und Kontaktfläche (109) angeordnet ist, wobei der bewegliche Bereich in der Nähe der Längsöffnung (118) von dieser einen doppelten Rand (122) in direktem Kontakt mit den seitlichen oberen Rändern der verschleißenden Schleiffeder (110) aufweist, und daß die elastisch verformbaren Einrichtungen ein Federorgan (142) aufweisen, das auf der Gelenkachse (114) derart wirkt, daß es auf den beweglichen Bereich (113) der Wippe eine Kraft ausübt, um die verschleißende Schleiffeder (110) auf der Stütz- und Kontaktfläche (109) zu halten.

11. Stromabnehmerkopf für Oberleitungsbus nach Anspruch 10, dadurch gekennzeichnet, daß der Hauptkörper (108) der Wippe (106) längliche Lager (143) aufweist, die die Enden der Gelenkachse (114) aufnehmen.

12. Stromabnehmerkopf für Oberleitungsbus nach Anspruch 10 oder 11, dadurch gekennzeichnet, daß das Federorgan eine Torsionsfeder (142) ist, die auf dem Hauptkörper (108) der Wippe angeordnet ist, und von der wenigstens ein Schenkel (148) in Anlage an die Gelenkachse (114) ist.

13. Stromabnehmerkopf für Oberleitungsbus nach Anspruch 12, dadurch gekennzeichnet, daß die Gelenkachse (114) eine scharfe Kante (149) aufweist, auf der sich der Schenkel (148) der Torsionsfeder (142) abstützt, wenn sich der bewegliche Bereich (113) der Wippe in Verriegelungsstellung befindet.

14. Stromabnehmerkopf für Oberleitungsbus nach einem der Ansprüche 10 bis 13, dadurch gekennzeichnet, daß die elastisch verformbaren Einrichtungen egenfalls einen Verriegelungsclip (116) aufweisen, der am anderen Ende des beweglichen Bereichs (113) der Wippe angeordnet ist.k

15. Stromabnehmerkopf für Oberleitungsbus anch einem der Ansprüche 10 bis 14, dadurch gekennzeichnet, daß die Stütz- und Kontaktfläche im wesentlichen aus Kontaktlamellen (150) gebildet ist, die eine gewisse Elastizität aufweisen und auf der Oberseite des Hauptkörpers (108) der Wippe angeordnet sind.

16. Stromabnehmerkopf für Oberleitungsbus nach Anspruch 15, dadurch gekennzeichnet, daß die Kontaktlamellen in Form wenigstens eines Plättchens (150) vorliegen, das in einer Längskerbe (151) des Hauptkörpers (108) der Wippe angeordnet ist.

17. Stromabnehmerkopf für Oberleitungsbus nach Anspruch 16, dadurch gekennzeichnet, daß zwei Plättchen (150) vorgesehen sind, die einerseits und andererseits eines zentralen Verbindungsbereichs (131) des Hauptkörpers der Wippe angeordnet sind, welcher zur Aufnahme des Endes eines Shunts (112) vorgesehen ist, der durch die Gelenkverbindung der Wippe hindurchgeht.

18. Stromabnehmerkf für Oberleitungsbus nach einem der Ansprüche 10 bis 17, dadurch gekennzeichnet, daß er weiterhin Einrichtungen (158, 162) aufweist, um die Wippe bei Stößen zurückzustellen, wenn der genannte Kopf von der Auffangleitung wegspringt.

19. Stromabnehmerkopf für Oberleitungsbus nach Anspruch 18, dadurch gekennzeichnet, daß die Gelenkhülse (134) der Wippe auf einem Reiter (158) angeordnet ist, der auf einer festen Achse (161) kippen kann, wobei der Reiter normalerweise mittels elastischer Einrichtungen (162) in Anlage gegen einen Anschlag (163) gehalten wird.

20. Stromabnehmerkopf für Oberleitungsbus nach Anspruch 19, dadurch gekennzeichnet, daß die elastischen Einrichtungen durch eine Torsionfeder (162) gebildet sind, die auf der festen Achse (161) angeordnet ist.

21. Verschleißende Schleiffeder, die für die Ausrüstung eines Stromabnehmerkopfes für Oberleitungsbus nach einem der Ansprüche 10 bis 20 vorgesehen ist, dadurch gekennzeichnet, daß sie durch einen länglichen Körper (110) von im wesentlichen konstantem Querschnitt gebildet ist, wobei der Querschnitt im wesentlichen die Form eines Trapezes aufweist, dessen kleinere Basis einer ebenen Unterseite (153) entspricht, bevor sie gegen die Stütz- und Kontaktfläche des Hauptkörpers der Wippe gebracht wird.

22. Schleiffeder nach Anspruch 21, dadurch gekennzeichnet, daß sie zwei parallele Facetten (154) in der Nähe der seitlichen oberen Ränder aufweist, auf die sich die zugehörigen Ränder des beweglichen Bereichs (113) der Wippe abstützen, sodann zwei geneigte Seiten (155) aufweist, die die untere ebene Seite der genannten Schleiffeder zurückgewinnen bzw. zu ihr zurücklaufen.

23. Schleiffeder nach Anspruch 22, dadurch gekennzeichnet, daß jede der geneigten Seiten (155) einen Winkel von ungefähr 30° mit der benachbarten Facette (154) bildet.

**Claims**

1. A trolley bus head (1, 101) comprising a cradle swivel (4, 104) pivotally mounted at the end of a pole (2, 102), a cradle (6, 106) mounted on the cradle swivel by means of a connection allowing oscillation about a substantially vertical axis (7, 107) and rocking about a substantially horizontal axis, said cradle (6, 106) receiving a replaceable wiper (10, 110) for transmitting current to a cable (11, 111) mounted on the pole (2, 102) via a shunt (12, 112) connected to the cradle (6, 106), characterized in that the cradle (6, 106) comprises a main body (8, 108) having a support and contact face (9, 109) for engaging a bottom portion of the replaceable wiper (10, 110), and a moving portion (13, 113) which is latchable on said main body, said moving portion being hinged about an axis (14, 114) carried on said main body (8, 108) and having a longitudinal opening (18, 118) through which a top portion of the repleceable wiper (10, 110) passes, resiliently deformable means (23, 142) being provided for holding the replaceable wiper against the support and contact face when the moving portion is latched against the main body.

2. A trolley bus head according to claim 1, characterized in that the replaceable wiper (10) has two longitudinally extending fins (20) at the bottom thereof for co-operating with the moving portion (13) of the cradle in order to hold said replaceable wiper against the support and contact face (9) using said resiliently deformable means.

3. A trolley bus head according to claim 2, characterized in that the resiliently deformable means comprise two corrugated branches (24), with each corrugated branch being housed, when said moving portion is latched against the main body, between a corresponding longitudinally extending fin (20) of the replaceable wiper and and associated rim (22) provided on the moving portion of the cradle in the vicinity of its longitudinal opening.

4. A trolley bus head according to claim 4, characterized in that the resiliently deformable means are in the form of a single part (23) carried by the moving portion or the cradle.

5. A trolley bus head according to claim 4, characterized in that said single part (23) has a connection tab (26) which surrounds the hinge axis of the moving portion or the cradle.

6. A trolley bus head according to claim 5, characterized in that said single part (23) is generally rectangular in shape having an opening (25) for passing the top portion of the replaceable wiper.

7. A trolley bus head according to anyone of claims 1 to 6, characterized in that the main body of the cradle has a support and contact face (9) covered with diamond-shaped points.

8. A trolley bus head according to anyone of claims 1 to 7, characterized in that the main body (8) of the cradle has an abutment (30) located at each end of its support and contact face (9) and serving to hold the replaceable wiper against longitudinal displacement.

9. A trolley bus head according to anyone of claims 1 to 8, characterized in that the main body of the cradle has a central connection portion (31) which receives one end of a shunt (12) passing through the oscillating connection or the cradle.

10. A trolley bus head according to claim 1, characterized in that the moving portion (113) of the cradle (106) is hinged about a shaft (114) mounted on the main body (108) of said cradle, said shaft being mounted free to move transversely in a direction which is substantially perpendicular to the support and contact face (109), said moving portion including two rims (122) in the vicinity of the μ longitudinal opening (118) and coming into direct contact with top side edges of the replaceable wiper (110), and wherein said resiliently deformable means comprise a spring member (142) acting on the hinge shaft (114) in such a manner as to exert a force on the moving portion (113) of the cradle suitable for maintaining the replaceable wiper (110) against the support and contact face (109).

11. A trolley bus head according to claim 10, characterized in that the main body (108) of the cradle (106) includes oblong bearings (143) receiving the ends of the hinge shaft (114).

12. A trolley bus head according to claim 10, characterized in that the spring member is a torsion spring (142) mounted on the main body (108) of the cradle and having at least one branch (148) pressing against the hinge shaft (114).

13. A trolley bus head according to claim 12, characterized in that the hinge shaft (114) has a sharp edge (149) against which the branch (148) of the torsion spring (142) presses when the moving portion (113) of the cradle is in the latched position.

14. A trolley bus head according to anyone or claims 10 to 13, characterized in that the resiliently deformable means include a latching clip (116) mounted on the other end of the moving portion (113) of the cradle.

15. A trolley bus head according to anyone of claims 10 to 14, characterized in that the support and contact face is centrally constituted by contact blades (150) having a degree of resilience and disposed on the top face or the main body (108) of the cradle.

16. A trolley bus head according to claim 15, characterized in that the contact blades are in the form of at least one plate (150) disposed in a longitudinal groove (151) on the main body (108) of the cradle.

17. A trolley bus head according to claim 16, characterized in that two such plates (150) are provided, disposed on either side of a central connection portion (131) of the main body or the cradle for receiving one end of a shunt (112) which passes through the mountings allowing the cradle to swivel and oscillate.

18. A trolley bus head according to anyone of claims 10 to 17, characterized in that it further includes means (158, 162) for retracting the cradle in the event of a mechanical shock when said head escapes from the pickup line.

19. A trolley bus head according to claim 18, characterized in that the cradle is mounted to oscillate about a tube (134) which is in turn mounted on a bridge (158) capable of tilting about a fixed axis (161) to retract said cradle said bridge being normally pressed against an abutment (163) by resilient means (162).

20. A trolley bus head according to claim 19 characterized in that said resilient means are constituted by a torsion spring (162) mounted on the fixed axis (161).

21. A replaceable wiper for fitting to a trolley bus head according to anyone or claims 10 to 20, characterized in that it is constituted by an elongate body (110) of essentially constant cross-section, said cross-section being substantially trapezoidal in shape with the small base corresponding to a bottom plane face (153) pressing against the support and contact face of the main body of the cradle.

22. A replaceable wiper according to claim 21, characterized in that it includes two parallel facets (154) adjacent to the top side edges thereof against which associated rims of the moving portion (113) of the cradle are pressed, followed by two inclined races (155) running to said bottom plane face of said replaceable wiper.

23. A replaceable wiper according to claim 22, characterized in that each of said inclined faces (155) is at an angle of about 30° with the adjacent facet (154).

FIG.13

FIG.1

EP 0 226 497 B1

## FIG.2

## FIG.3

FIG_4

FIG_11

EP 0 226 497 B1

# FIG.12

# FIG.5

# FIG.6

# FIG.7

# FIG.8

# FIG.9

# FIG.10